# EUROPÄISCHE PATENTANMELDUNG

(11) **EP 1 975 090 A2**
(43) Veröffentlichungstag der Anmeldung: **01.10.2008**
(21) Anmeldenummer: 08005012.3
(22) Anmeldetag: 18.03.2008
(51) Int. Cl.: B65G 1/02

(54) **Verfahren und Vorrichtung zur Notbremsung eines schienengebundenen Regalbediengerätes**

(30) Priorität: 30.03.2007 DE 102007015427
(71) Anmelder: Dambach Lagersysteme GmbH & Co. KG, 76476 Bischweier (DE)
(72) Erfinder: Fürniß, Ulrich, 76571 Gaggenau (DE)
(74) Vertreter: Lasch, Hartmut

(57) **Zusammenfassung**

Bei einem Verfahren zur Notbremsung eines schienengebundenen Regalbediengerätes wird eine in einem Regalgang ortsfest angeordnete Steuerfläche abgetastet und bei Überschreiten einer zulässigen Grenzgeschwindigkeit des Regalbediengerätes ein Bremsvorgang für das Regalbediengerät ausgelöst. Die Steuerfläche weist eine Codierung in Form einer Vielzahl von in Fahrtrichtung in einer Reihe auf Abstand hintereinander angeordneten Markierungen auf, wobei jede Markierung berührunglos abgetastet und jeweils ein entsprechendes Markeirungssignal erzeugt wird. Der zeitliche Abstand ΔT_{IST} zwischen zwei aufeinanderfolgenden Markierungssignalen wird ermittelt und mit einem Soll-Wert ΔT_{SOLL} verglichen, wobei der Bremsvorgang für das Regalbediengerät ausgelöst wird, wenn ΔT_{IST} < ΔT_{SOLL.}

## Beschreibung

Die Erfindung betrifft ein Verfahren zur Notbremsung eines schienengebundenen Regalbediengerätes, wobei eine in einem Regalgang ortsfest angeordnete Steuerfläche abgetastet und bei Überschreiten einer zulässigen Grenzgeschwindigkeit des Regalbediengerätes ein Bremsvorgang für das Regalbediengerät ausgelöst wird.

Desweiteren betrifft die Erfindung eine Vorrichtung zur Notbremsung eines schienengebundenen Regalbediengerätes mit einer in einem Regalgang ortsfest angeordneten Steuerfläche, einer Abtastvorrichtung zum Abtasten der Steuerfläche und einer Auslösevorrichtung, mittels der ein Bremsvorgang für das Regalbediengerät bei Überschreiten der zulässigen Grenzgeschwindigkeit auslösbar ist.

In einem Hochregallager finden üblicherweise Regalbediengeräte Verwendung, die mittels einer am Boden verlegten Schiene geführt sind. Jedes Regalbediengerät besitzt einen vertikalen Mast, an dem eine verstellbare Hubbühne geführt ist. Wenn der Mast eine vorgegebene Höhe überschreitet, kann das Regalbediengerät auch an der Decke über eine zusätzliche Schiene geführt sein.

Die Wirtschaftlichkeit eines Regalbediengerätes ist nicht nur von der Einlager- und Auslagerzeit abhängig, in der Waren in ein Regalfach eingelagert bzw. aus einem Regalfach ausgelagert werden können, sondern auch die Fahrgeschwindigkeit zwischen unterschiedlichen Regallagerplätzen und insbesondere die Fahrgeschwindigkeit längs des Regalgangs hat einen wesentlichen Einfluss auf die Effektivität. Es ist deshalb gewünscht, das Regalbediengerät mit möglichst hoher Geschwindigkeit längs des Regalgangs zu verfahren. Damit ist jedoch das Risiko verbunden, dass das Regalbediengerät am Regalgangende eine zu hohe Geschwindigkeit aufweist und es dort zu einem Unfall kommt. Diese Problematik ist seit langem bekannt und wurde früher dadurch gelöst, dass am Regalbediengerät und/oder am Regalgangende hydraulische Puffer angeordnet sind, die einen Aufprall des Regalbediengerätes am Regalgangende abmindern sollen. Ein Auffahren auf die hydraulischen Puffer erzeugt jedoch im Regalbediengerät und insbesondere in dem vertikalen Mast hohe dynamische Belastungen, was wiederrum bedingt, dass das Regalbediengerät mit einer im Normalbetrieb an sich nicht notwendigen Steifigkeit ausgebildet sein muss. Dieses Vorgehen ist konstruktiv aufwendig und teuer.

Aus der EP 0 694 461 A ist eine Vorrichtung zur Überwachung der Geschwindigkeit eines Regalbediengerätes am Regalgangende bekannt, mit der eine Notbremsung des Regalbediengeräts ausgelöst wird, wenn eine zulässige Grenzgeschwindigkeit überschritten wird. Die bekannte Vorrichtung weist eine sinusförmige Steuerfläche auf, die im Regalgang ortsfest angeordnet ist und auf der eine Rolle eines vertikal verstellbaren Schlittens abrollt, der an dem Regalbediengerät angeordnet ist. Wenn das Regalbediengerät im Endbereich des Regalgangs mit einer IST-Geschwindigkeit unterhalb der Grenzgeschwindigkeit fährt, kann die Rolle dem sinusförmigen Verlauf der Steuerfläche problemlos folgen und der Schlitten führt eine entsprechende Auf- und Abbewegung aus. Bei einer übermäßig hohen IST-Geschwindigkeit kann die Rolle der sinusförmigen Steuerfläche nicht folgen und hebt beim Überfahren eines oberen Scheitelpunktes der Sinuskurve von der Steuerfläche ab. Diese ungewollte Relativverstellung zwischen der Rolle bzw. dem Schlitten einerseits und der Steuerfläche andererseits führt zu einem mechanischen Anschlagen eines mit der Rolle verbundenen Auslösekörpers an einem Vorsprung auf der Unterseite der Steuerfläche, wodurch ein Bremsvorgang für ein Regalbediengerät ausgelöst wird.

Die in der EP 0 694 461 A beschriebene Vorrichtung ist aufgrund ihrer rein mechanischen Funktionsweise zwar sehr robust und widerstandsfähig, jedoch ist das Abheben der Rolle von der sinusförmigen Steuerfläche von verschiedenen Reibungskräften, beispielsweise der Reibung zwischen dem Schlitten und seiner Führung und auch von der Reibung zwischen der Rolle und der Steuerfläche abhängig, wobei sich die Reibung bei längerem Betrieb des Regalbediengerätes insbesondere infolge Verschmutzung stark ändern kann. Eine genaue Einhaltung definierter Grenzwerte für die maximale Geschwindigkeit ist auf diese Weise nicht zu erzielen.

Der Erfindung liegt die Aufgabe zugrunde, ein Verfahren zur Notbremsung eines schienengebundenen Regalbediengeräts zu schaffen, bei dem die Einhaltung einer zulässigen Grenzgeschwindigkeit mit hoher Genauigkeit gewährleistet ist. Darüber hinaus soll eine Vorrichtung zur Notbremsung eines schienengebundenen Regalbediengerätes geschaffen werden, mit dem sich das Verfahren in einfacher und kostengünstiger Weise durchführen lässt.

Hinsichtlich des Verfahrens wird die oben genannte Aufgabe durch die Merkmale des Anspruchs 1 gelöst. Dabei ist vorgesehen, dass die Steuerfläche eine Codierung in Form einer Vielzahl von in Fahrtrichtung in einer Reihe auf Abstand hintereinander angeordneten Markierungen aufweist, dass jede Markierung berührungslos abgetastet und ein entsprechendes Markierungssignal erzeugt wird und dass der zeitliche Abstand ΔT_{IST} zwischen zwei aufeinanderfolgenden Markierungssignalen ermittelt und mit einem Soll-Wert ΔT_{SOLL} verglichen wird, wobei der Bremsvorgang für das Regalbediengerät ausgelöst wird, wenn ΔT_{IST} < ΔT_{SOLL}.

Erfindungsgemäß ist vorgesehen, insbesondere am Ende des Regalgangs eine Codierung in Form einer Reihe auf Abstand hintereinander angeordneter Markierungen ortsfest anzubringen. In einer möglichen Ausgestaltung der Erfindung kann vorgesehen sein, dass die Markierungen von einem Strichcode in Form einer Folge von parallelen, in Fahrtrichtung auf Abstand angeordneten Strichen oder Balken gebildet sind, wobei der gegenseitige Abstand Δs aufeinanderfolgender Striche oder Balken in Richtung des Regalgangendes abnimmt. Wenn das Regalbediengerät im Endbereich des Regalgangs an der Steuerfläche vorbeifährt und die dortigen Markierungen bzw. Striche und Balken abtastet, wird der zeitliche Abstand ΔT_{IST} zwischen zwei aufeinanderfolgenden Markierungssignälen ermittelt. Solange dieser zeitliche Abstand ΔT_{IST} oberhalb eines Soll-Wertes ΔT_{SOLL} von beispielsweise 100ms liegt, bedeutet dies, dass das Regalbediengerät langsamer als die zulässige Grenzgeschwindigkeit ist.

Je näher das Regalbediengerät dem Regalgangende kommt, desto geringer ist der gegenseitige Abstand Δs aufeinanderfolgender Markierungen bzw. Striche oder Balken, so dass auch der zeitliche Abstand ΔT_{IST} zwischen zwei aufeinanderfolgenden Markierungssignalen geringer wird, falls das Regalbediengerät nicht die Geschwindigkeit absenkt. Durch den sich in Richtung des Regalgangendes ändernden gegenseitigen Abstand Δs aufeinanderfolgender Markierungen bzw. Striche oder Balken lässt sich auf diese Weise mit hoher Präzision eine Stufenkurve für die zulässige Grenzgeschwindigkeit des Regalbediengerätes definieren, wobei die zulässige Grenzgeschwindigkeit mit Annäherung an das Regalgangende abnimmt.

Wenn das Regalbediengerät sich mit konstanter Geschwindigkeit dem Regalgangende nähert, verringert sich der zeitliche Abstand ΔT_{IST} zwischen zwei aufeinanderfolgenden Markierungssignalen mit Annäherung an das Regalgangende, da der gegenseitige Abstand Δs aufeinanderfolgender Markierungen in Richtung des Regalgangendes abnimmt. Sobald der ermittelte zeitliche Abstand ΔT_{IST} zwischen zwei aufeinanderfolgenden Markierungssignalen geringer als der Soll-Wert ΔT_{SOLL} ist, wird der Bremsvorgang für das Regalbediengerät zwangsweise ausgelöst und dieses zum Stillstand gebracht.

Die Markierungen können statt von einem Strichcode auch durch eine andere Folge von in einer Reihe auf Abstand hintereinander angeordneten Elementen gebildet sein. Beispielsweise ist es möglich, dass die Markierungen von Kanten von Durchbrechungen oder Ausnehmungen einer in Fahrtrichtung verlaufenden Oberfläche gebildet sind, wobei auch in diesem Fall der gegenseitige Abstand aufeinanderfolgender Kanten in Richtung des Regalgangendes abnimmt. In einer möglichen Ausgestaltung einer entsprechenden Oberfläche kann eine Platte vorgesehen sein, die mit in einer Reihe angeordneten Vertiefungen oder Durchbrechungen versehen ist. Der Sensor wird längs der Reihe von Vertiefungen oder Durchbrechungen verfahren und jedesmal, wenn der Sensor den Rand einer Vertiefung oder Durchbrechung feststellt, wird ein entsprechendes Markierungssignal erzeugt. Durch die Größe der Vertiefungen oder Durchbrechungen und somit durch den gegenseitigen Abstand der Kanten kann die zulässige Grenzgeschwindigkeit unter Berücksichtigung des Soll-Wertes ΔT_{SOLL} für den zeitlichen Abstand definiert werden.

Eine gleichartige Wirkung wird sich auch mit einer sogenannten Kammplatte bzw. einem Kammblech erzielen, wobei eine Reihe von in Fahrtrichtung in Abstand hintereinander liegenden Fingern oder Vorsprüngen vorgesehen ist. Bei jedem Übergang von einem Vorsprung auf eine zwischen den Vorsprüngen liegende Durchbrechung oder von der Durchbrechung auf einen Vorsprung ist eine von dem Sensor zu erfassende Kante gegeben, an der ein entsprechendes Markierungssignal erzeugt wird.

In bevorzugter Ausgestaltung der Erfindung ist vorgesehen, dass die Markierungen mittels eines optischen Sensors oder mittels einer Lichtschranke abgetastet werden.

In einer weiteren Ausgestaltung der Erfindung ist vorgesehen, dass die Markierungen von auf einem Magnetstreifen gespeicherten Impulsen gebildet sind. Wenn ein Sensor den Magnetstreifen entlangfährt, erzeugt er bei Überfahren jedes auf dem Magnetstreifen gespeicherten Impulses ein Markierungssignal, das in oben genannter Weise ausgewertet wird.

Hinsichtlich der Vorrichtung die oben genannte Aufgabe durch die Merkmale des Anspruchs 8 gelöst. Dabei ist vorgesehen, dass auf der Steuerfläche eine Codierung in Form einer Vielzahl von in Fahrtrichtung in einer Reihe auf Abstand hintereinander angeordneten Markierungen ausgebildet ist, dass die Markierungen mittels der Abtastvorrichtung berührungslos abtastbar sind und entsprechende Abtastsignale einer Auswerteeinheit zuführbar sind, in der der zeitliche Abstand ΔT_{IST} zwischen zwei aufeinanderfolgenden Markierungssignalen ermittelbar und mit einem Soll-Wert ΔT_{SOLL} vergleichbar ist, und dass die Auslösevorrichtung mittels der Auswerteeinheit aktivierbar ist, wenn ΔT_{IST} < ΔT_{SOLL}.

Die Funktionsweise und weitere Merkmale der Vorrichtung ergeben sich aus der obenstehenden Beschreibung des Verfahrens, worauf zwecks Vermeidung von Widerholungen verwiesen werden soll.

Weitere Einzelheiten und Merkmale der Erfindung ergeben sich aus der folgenden Beschreibung von Ausführungsbeispielen unter Bezugnahme auf die Zeichnung. Es zeigen:
- Fig. 1: eine Steuerfläche in Form eines Strichcodes,
- Fig. 2: eine Steuerfläche in Form einer Lochplatte und
- Fig. 3: eine Steuerfläche in Form eines Kammblechs.

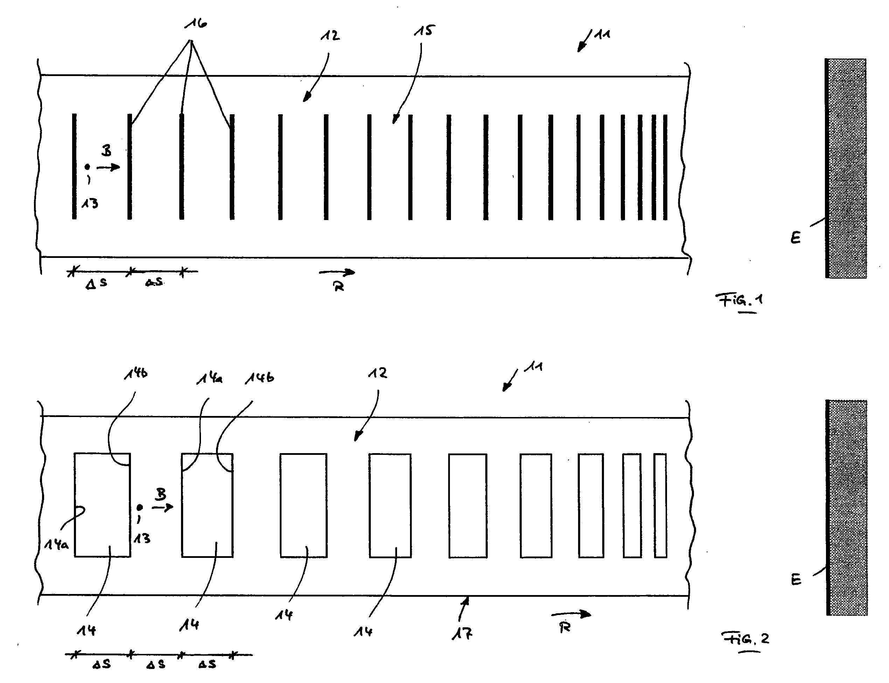

Figur 1 zeigt eine Steuerfläche 11 für ein Verfahren zur Notbremsung eines schienengebundenen Regalbediengerätes, wie sie am Ende eines Regalgangs ortsfest angebracht wird. Das Ende des Regalgangs ist in Figur 1 auf der rechten Seite symbolisch dargestellt und mit E bezeichnet.

Die Steuerfläche 11 trägt eine Codierung 12 in Form eines Strichcodes 15, der eine Folge von parallelen, sich senkrecht zur Fahrtrichtung R des Regalbediengeräts erstreckenden und in Fahrtrichtung R auf Abstand angeordneten Strichen 16 gebildet ist, die jeweils eine Markierung bilden. Der Abstand zwischen zwei aufeinanderfolgenden Strichen 16 sei mit Δs bezeichnet, wobei der gegenseitige Abstand Δs aufeinanderfolgender Striche 16 in Richtung des Regalgangendes E abnimmt.

An dem nicht dargestellten Regalbediengerät ist eine Abtastvorrichtung angeordnet, was in Figur 1 durch einen Abtastpunkt 13 symbolisch dargestellt ist. Wenn das Regalbediengerät in Richtung des Regalgangendes E fährt, überstreicht der Abtastpunkt 13 die Steuerfläche 11 sowie den darauf befindlichen Strichcode 15, was durch den Pfeil B angedeutet ist. Jedes Mal, wenn der Abtastpunkt 13 einen Strich 16 überquert, wird ein Markierungssignal erzeugt. Für zwei aufeinanderfolgende Markierungssignale wird der jeweilige zeitliche Abstand ΔT_{IST} ermittelt und mit einem vorgespeicherten Soll-Wert ΔT_{SOLL} verglichen. Wenn ΔT_{IST} größer als ΔT_{SOLL} ist, bedeutet dies, dass das Regalbediengerät die Strecke zwischen den beiden aktuell betrachteten Strichen 16 zu schnell zurückgelegt hat. Dies wird durch den Vergleich von ΔT_{IST} mit ΔT_{SOLL} ermittelt und das Regalbediengerät wird zwangsweise abgebremst, wenn der Soll-Wert ΔT_{SOLL} unterschritten ist.

Wie Figur 1 zeigt, nimmt der gegenseitige Abstand Δs aufeinanderfolgender Striche 16 in Richtung des Regalgangendes E ab. Dies bedeutet, dass das Regalbediengerät mit Annäherung an das Regalgangende E langsamer werden muss, um weiterhin für den zeitlichen Abstand ΔT_{IST} zwischen zwei aufeinanderfolgenden Markierungssignalen unterhalb des Soll-Wertes ΔT_{SOLL} zu bleiben und um dadurch eine Zwangsbremsung zu verhindern.

Figur 2 zeigt eine alternative Ausgestaltung der Steuerfläche 11 in Form einer sich in Fahrtrichtung R erstreckenden Platte 17, in der eine Folge von in Fahrtrichtung R auf Abstand angeordneter Durchbrechungen 14 ausgebildet sind, die im dargestellten Ausführungsbeispiel jeweils die Form eines Rechtecks aufweisen und die Codierung 12 bilden. Jedes Rechteck besitzt eine dem Regalgangende E abgewandte Seitenkante 14a und eine dem Regalgangende E zugewandte Seitenkante 14b. Die Seitenkanten 14a und 14b bilden eine Reihe von in Fahrtrichtung R auf Abstand hintereinander angeordneter, strichartiger Markierungen, die mittels eines Abtastpunktes 13 in genannter Weise erfasst werden können. Sowohl die Breite der Durchbrechungen 14 in Fahrtrichtung R als auch der Abstand zwischen benachbarten Durchbrechungen 14 in Fahrtrichtung R nimmt in Richtung des Regalgangendes E ab, so dass das Verfahren zur Überwachung der Geschwindigkeit des Regalbediengerätes am Ende des Regalgangs und gegebenenfalls zur Auslösung einer Notbremsung in oben genanter Weise erfolgen kann.

Da bei der Ausgestaltung gemäß Figur 2 die Durchbrechungen 14 in der Platte 17 ausgebildet sind, ist es möglich, die Erfassung der Kanten 14a und 14b mittels einer Lichtschranke durchzuführen, wobei der Lichtsensor auf einer Seite der Platte 17 und der Lichtempfänger auf der anderen Seite der Platte 17 angeordnet und diese beiden Teile als Einheit längs der Platte 17 bewegt werden.

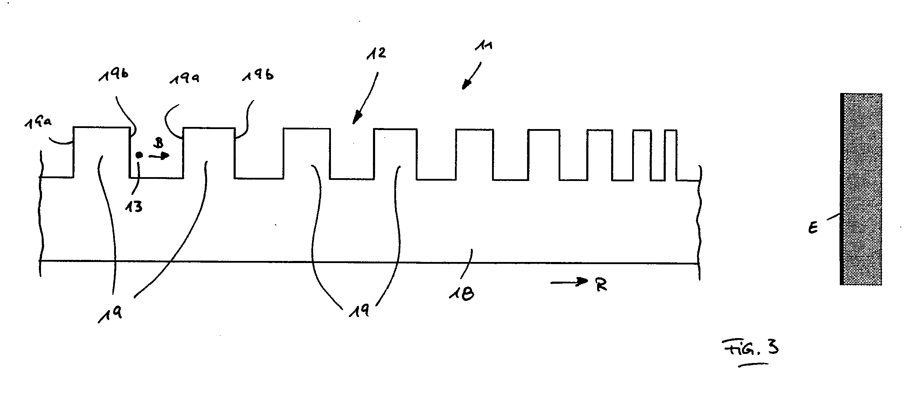

Figur 3 zeigt eine Alternative zur Ausgestaltung gemäß Figur 2, wobei die Platte hier als Kammplatte 18 ausgebildet ist, die eine Vielzahl von zinnenartigen Vorsprüngen 19 aufweist, die in Fahrtrichtung R voneinander beabstandet sind und eine in Fahrtrichtung R verlaufende Reihe bilden. Jeder Vorsprung 19 besitzt eine dem Regalgangende E abgewandte Seitenkante 19a und eine dem Regalgangende E zugewandte Seitenkante 19b, so dass die Kanten 19a und 19b aller Vorsprünge 19 eine Codierung in Form einer Folge von parallelen, in Fahrtrichtung R auf Abstand angeordneten, strichartigen Markierungen bilden, die in genannter Weise erfasst werden, wobei auch in diesem Fall vorgesehen ist, dass der gegenseitige Abstand Δs aufeinanderfolgender Kanten 19a, 19b in Richtung des Regalgangendes E abnimmt.

## Patentansprüche

1. Verfahren zur Notbremsung eines schienengebundenen Regalbediengerätes, wobei eine in einem Regalgang ortsfest angeordnete Steuerfläche (11) abgetastet und bei Überschreiten einer zulässigen Grenzgeschwindigkeit des Regalbediengerätes ein Bremsvorgang für das Regalbediengerät ausgelöst wird, **dadurch gekennzeichnet, dass** die Steuerfläche (11) eine Codierung (12) in Form einer Vielzahl von in Fahrtrichtung (R) in einer Reihe auf Abstand hintereinander angeordneten Markierungen (16; 14a, 14b; 19a, 19b) aufweist, dass jede Markierung (16; 14a, 14b; 19a, 19b) berührungslos abgetastet und ein entsprechendes Markierungssignal erzeugt wird und dass der zeitliche Abstand ΔT_{IST} zwischen zwei aufeinanderfolgenden Markierungssignalen ermittelt und mit einem Soll-Wert ΔT_{SOLL} verglichen wird, wobei der Bremsvorgang für das Regalbediengerät ausgelöst wird, wenn ΔT_{IST} < ΔT_{SOLL} ist.

2. Verfahren nach Anspruch 1, **dadurch gekennzeichnet**, das die Markierungen (16; 14a, 14b; 19a, 19b) mittels eines optischen Sensors abgetastet werden.

3. Verfahren nach Anspruch 2, **dadurch gekennzeichnet, dass** die Markierungen (16; 14a, 14b; 19a, 19b) mittels einer Lichtschranke abgetastet werden.

4. Verfahren nach einem der Ansprüche 1 bis 3, **dadurch gekennzeichnet, dass** die Markierungen von einem Strichcode (15) in Form einer Folge von parallelen, in Fahrtrichtung (R) auf Abstand angeordneten Strichen (16) oder Balken gebildet sind, wobei der gegenseitige Abstand Δs aufeinanderfolgender Striche (16) oder Balken in Richtung des Regalgangendes (E) abnimmt.

5. Verfahren nach einem der Ansprüche 1 bis 3, **dadurch gekennzeichnet, dass** die Markierungen von Kanten (14a, 14b) von Durchbrechungen (14) einer in Fahrtrichtung (R) verlaufenden Platte (17) gebildet sind, wobei der gegenseitige Abstand Δs aufeinanderfolgender Kanten (14a 14b) in Richtung des Regalgangendes (E) abnimmt.

6. Verfahren nach einem der Ansprüche 1 bis 3, **dadurch gekennzeichnet, dass** die Markierungen von Kanten (19a, 19b) an zinnenartigen Vorsprüngen (19) einer in Fahrtrichtung (R) verlaufenden Kammplatte (18) gebildet sind, wobei der gegenseitige Abstand Δs aufeinanderfolgender Kanten (19a, 19b) in Richtung des Regalgangendes (E) abnimmt.

7. Verfahren nach einem der Ansprüche 1 bis 3, **dadurch gekennzeichnet, dass** die Markierungen von auf einem Magnetstreifen gespeicherten Impulsen gebildet sind, wobei der gegenseitige Abstand aufeinanderfolgender Impulse in Richtung des Regalgangendes abnimmt.

8. Vorrichtung zur Notbremsung eines schienengebundenen Regalbediengerätes, mit einer in einem Regalgang ortsfest angeordneten Steuerfläche (11), einer Abtastvorrichtung (13) zum Abtasten der Steuerfläche (11) und einer Auslösevorrichtung, mittels der ein Bremsvorgang für das Regalbediengerät bei Überschreiten einer zulässigen Grenzgeschwindigkeit auslösbar ist, **dadurch gekennzeichnet, dass** auf der Steuerfläche (11) eine Codierung (12) in Form einer Vielzahl von in Fahrtrichtung (R) in einer Reihe auf Abstand hintereinander angeordneten Markierungen (16; 14a, 14b; 19a, 19b) ausgebildet ist, dass die Markierungen (16; 14a, 14b; 19a, 19b) mittels der Abtastvorrichtung (13) berührungslos abtastbar sind und entsprechende Abtastsignale einer Auswerteeinheit zuführbar sind, in der der zeitliche Abstand ΔT_{IST} zwischen zwei aufeinanderfolgenden Markierungssignalen ermittelbar und mit einem Sollwert ΔT_{SOLL} vergleichbar ist, und dass die Auslösevorrichtung mittels der Auswerteeinheit aktivierbar ist, wenn ΔT_{IST} < ΔT_{SOLL} ist.

9. Vorrichtung nach Anspruch 8, **dadurch gekennzeichnet, dass** die Abtastvorrichtung (13) einen optischen Sensor oder eine Lichtschranke aufweist.

10. Vorrichtung nach Anspruch 8 oder 9, **dadurch gekennzeichnet, dass** die Markierungen von einem Strichcode (15) in Form einer Folge von parallelen, in Fahrtrichtung (R) auf Abstand angeordneten Strichen (16) oder Balken gebildet sind, wobei der gegenseite Abstand Δs aufeinanderfolgender Striche oder Balken in Richtung des Regalgangendes abnimmt.

11. Vorrichtung nach 8 oder 9, **dadurch gekennzeichnet, dass** die Markierungen von Kanten (14a, 14b) von Durchbrechungen (14) einer in Fahrtrichtung (R) verlaufenden Oberfläche gebildet sind, wobei der gegenseitige Abstand Δs aufeinanderfolgender Kanten (14a, 14b) in Richtung des Regalgangendes abnimmt.

12. Vorrichtung nach Anspruch 8 oder 9, **dadurch gekennzeichnet, dass** die Markierungen von Kanten (19a, 19b) an zinnenartigen Vorsprüngen (19) einer in Fahrtrichtung (R) verlaufenden Kammplatte (18) gebildet sind, wobei der gegenseitige Abstand Δs aufeinanderfolgender Kanten (19a, 19b) in Richtung des Regalgangendes (E) abnimmt.

13. Vorrichtung nach 8 oder 9, **dadurch gekennzeichnet, dass** die Markierungen von auf einem Magnetstreifen gespeicherten Impulsen gebildet sind, wobei der gegenseitige Abstand aufeinanderfolgender Impulse in Richtung des Regalgangendes abnimmt.
